# FASCICULE DE BREVET EUROPEEN

(11) **EP 2 064 530 B1**
(45) Date de publication et mention de la délivrance du brevet: **26.02.2020**
(21) Numéro de dépôt: 07823843.3
(22) Date de dépôt: 17.09.2007
(51) Int. Cl.: G01F 23/26

(54) **DISPOSITIF DE MESURE MULTICAPTEUR POUR SONDE DE JAUGEAGE EMBARQUEE A BORD D'UN AVION**
MULTISENSORMESSANORDNUNG FÜR FÜLLSTANDSMESSGERÄT AN BORD EINES FLUGZEUGES
MULTIPLE-SENSOR MEASURING DEVICE FOR ON-BOARD GAUGING PROBE

(30) Priorité: 20.09.2006 FR 0653831
(43) Date de publication de la demande: 03.06.2009
(73) Titulaire: Airbus, 31700 Blagnac (FR)
(72) Inventeur: WILBY, Richard, F-31820 Pibrac (FR)
(74) Mandataire: Ilgart, Jean-Christophe
(86) Numéro de dépôt international: PCT/FR2007/051948
(87) Numéro de publication internationale: WO 2008/035002

(56) Documents cités:
- US-A- 4 420 976
- US-A- 4 434 657
- US-A- 5 187 979
- US-A1- 2002 194 906

## Description

### DOMAINE TECHNIQUE

La présente invention concerne le domaine des systèmes de jaugeage de carburant, en particulier pour application dans l'aéronautique.

### ÉTAT DE LA TECHNIQUE ANTÉRIEURE

On connaît de l'état de la technique plusieurs types de sondes pour mesurer la quantité de carburant dans un réservoir d'aéronef. La plus couramment utilisée est une sonde de jaugeage de type capacitif comprenant deux électrodes sous forme de tubes cylindriques disposés l'un dans l'autre de manière coaxiale. La sonde est ouverte à ses deux extrémités de sorte que le carburant pénètre librement dans l'espace entre les électrodes. La capacité du condensateur formé par les deux électrodes dépend linéairement de la hauteur de la colonne de carburant entre les deux tubes. On trouvera une description d'une telle sonde capacitive par exemple dans la demande de brevet FR-A-2582396.

Les sondes capacitives ne donnent toutefois pas entière satisfaction. En effet, la valeur de la capacité mesurée est fonction du coefficient diélectrique du carburant. Or, ce dernier varie en fonction de la qualité du carburant et de son taux de contamination éventuelle par l'eau, au gré des avitaillements. Afin de prévenir les erreurs de mesure, on est conduit à prévoir un système de jaugeage complexe intégrant différents types de capteurs. En pratique, ce système comprend une pluralité de sondes capacitives, dites sondes primaires, des détecteurs de niveau haut, des détecteurs de niveau bas, des capteurs de mesure de permittivité, de densité, de température, etc. Enfin, la plupart des avions sont également équipés d'un second type de sondes de jaugeage, dites secondaires, pouvant être utilisées au sol en cas de défaillance des sondes primaires. Ces sondes secondaires utilisent typiquement un aimant solidaire d'un flotteur, l'aimant se déplaçant vis-à-vis de capteurs de flux magnétique en fonction de la hauteur de carburant. On trouvera notamment une description d'une telle sonde MFLI (*Magnetic Fuel Level Indicator*) dans la demande de brevet DE-A-4128178.

L'installation des capteurs précités ou de sondes MFLI nécessite souvent de perforer en plusieurs points le réservoir ainsi que la paroi inférieure de l'aile. Il faut prévoir dans ce cas un montage étanche, ce qui immanquablement introduit des risques de fuite et complique les opérations de maintenance. En outre, un renfort doit être ajouté localement autour du trou perforé ce qui accroît le poids de l'appareil.

Les documents de brevet US 4 434 657 A1, US 5 187 979 A1 et US 4 420 976 A1 décrivent également des dispositifs de mesure pour système de jaugeage de carburant.

Le but premier de la présente invention est de proposer un système de jaugeage de carburant d'installation et de maintenance aisées qui ne requiert pas de perforation du réservoir.

Un but second de l'invention est de proposer un dispositif de mesure à capteurs microélectromécaniques (MEMS) qui puisse être facilement intégré dans les systèmes de jaugeage existants.

### EXPOSÉ DE L'INVENTION

La présente invention est définie par un dispositif de mesure multicapteur pour système de jaugeage de carburant selon la revendication 1.

Ladite pluralité de capteurs comprend de préférence au moins un capteur de pression et un capteur de densité. Elle peut comprendre également au moins un capteur de permittivité.

Selon un exemple de réalisation, ladite pluralité de capteurs comprend des capteurs de nature identique.

Selon un exemple de réalisation, l'insert a une forme annulaire et présente un alésage axial fileté.

Les premiers moyens de maintien sont constitués de préférence par une première pièce cylindrique, coaxiale avec l'insert, et se terminant à sa partie supérieure par une tête tubulaire filetée destinée à être vissée dans ledit alésage, ladite pièce cylindrique étant percée par un trou axial, de part en part.

Les seconds moyens de maintien sont de préférence constitués par une seconde pièce cylindrique, coaxiale avec la première, et percée par un trou axial, de part en part.

Une interface de connexion commune aux différents capteurs peut être montée à la surface extérieure du film annulaire, les fils de connexion entre lesdits capteurs et ladite interface étant alors noyés dans le matériau dudit film.

Le matériau dudit film est avantageusement du polycarbonate.

Afin de protéger les capteurs, ceux-ci sont avantageusement montés sur la surface intérieure du film annulaire.

Selon une première variante, lesdits moyens de fixation rapide comprennent, d'une part, des pions montés sur l'une des première et seconde pièces cylindriques, et, d'autre part, des alésages correspondants dans l'autre pièce, lesdits pions étant dimensionnés pour s'engager en force dans lesdits alésages correspondants.

Selon une seconde variante, lesdits moyens de fixation rapide comprennent, d'une part, des doigts d'encliquetage faisant partie intégrante de l'une des première et seconde pièces cylindriques, et d'autre part, une rainure correspondante dans l'autre pièce, lesdits doigts étant adaptés à s'encliqueter dans ladite rainure correspondante.

L'invention concerne également un système de jaugeage de carburant embarqué sur un aéronef comprenant :
- une pluralité de sondes capacitives installées à des hauteurs prédéterminées dans une pluralité de réservoirs de carburant ;
- une pluralité de dispositifs de mesure multicapteur tels que définis plus haut, lesdits dispositifs étant respectivement montés sur lesdites sondes capacitives ;
- une pluralité de processeurs locaux, chaque processeur local étant adapté à effectuer un traitement sur les données de mesure issues des sondes capacitives, des dispositifs de mesure multicapteur auxquels il est relié ;
- un processeur central adapté à calculer à partir des données ainsi traitées et des caractéristiques géométriques de ladite pluralité de réservoirs, la quantité de carburant que ceux-ci contiennent.

Le système de jaugeage peut comprendre en outre une pluralité de capteurs auxiliaires installés dans ladite pluralité de réservoirs, chaque capteur auxiliaire appartenant à un ensemble constitué d'un détecteur de niveau haut, un détecteur de niveau bas, un détecteur de présence d'eau et un capteur de température, chaque capteur auxiliaire étant relié à un desdits processeurs locaux, ce dernier étant adapté à traiter les données de mesure issues dudit capteur auxiliaire.

Avantageusement, les capteurs auxiliaires sont des capteurs MEMS.

Afin de protéger ces capteurs, chaque capteur MEMS est avantageusement monté sur la surface intérieure d'un étrier dont les pattes sont boulonnées sur la structure interne de l'aéronef.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1 représente une sonde capacitive équipée d'un dispositif de mesure multicapteur selon un mode de réalisation de l'invention ;
La Fig. 2 représente en vue éclatée un dispositif de mesure multicapteur selon un mode de réalisation de l'invention ;
La Fig. 3 représente une coupe axiale d'une partie du dispositif de mesure multicapteur ;
La Fig. 4 représente une vue de dessus d'une pièce du dispositif de mesure selon l'invention ;
La Fig. 5 représente un système de jaugeage embarqué utilisant des dispositifs de mesure multicapteur selon l'invention ;
La Fig. 6 montre le détail de montage d'un capteur auxiliaire appartenant au système de jaugeage représenté en Fig. 5.

### EXPOSÉ DÉTAILLÉ DE MODES DE RÉALISATION PARTICULIERS

L'idée à la base de la présente invention est d'utiliser les sondes capacitives primaires pour y intégrer un dispositif de mesure multicapteur, notamment à capteurs MEMS.

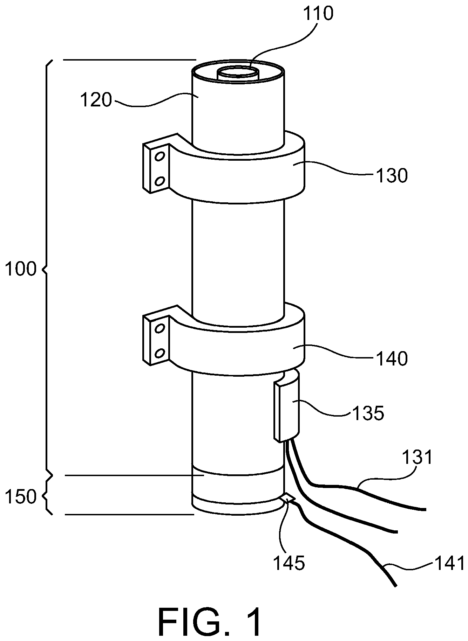

La Fig. 1 représente de manière schématique une sonde capacitive 100 de l'art antérieur que l'on a équipée du dispositif de mesure multicapteur 150 selon l'invention. La sonde capacitive comprend deux tubes cylindriques métalliques coaxiaux 110, 120, le tube extérieur 120 étant fixé au moyen de brides isolantes 130, 140 sur une armature interne du réservoir à une hauteur prédéterminée. Le tube intérieur 110 ne descend pas jusqu'à l'extrémité inférieure du tube extérieur 120, de sorte qu'un espace libre est disponible à la base de la sonde capacitive. Le dispositif de mesure multicapteur 150 vient avantageusement s'engager dans cet espace disponible, comme on le verra mieux plus loin.

Selon une première variante, la sonde capacitive 100 et le dispositif de mesure multicapteur 150 possèdent chacun leur propre connecteur, désigné par 135 et 145, respectivement. Les fils de connexion 141 transportent des signaux de faible voltage et sont de préférence blindés pour fournir une protection contre les interférences électromagnétiques, notamment contre celles générées par les signaux transitant sur les fils de connexion 131.

Selon une seconde variante non illustrée, les signaux issus de la sonde capacitive 100 et des capteurs du dispositif de mesure 150 sont traités par un processeur local, avantageusement mais non nécessairement installé dans le dispositif de mesure lui-même, avant d'être transmis via un bus de données au processeur central du système de jaugeage.

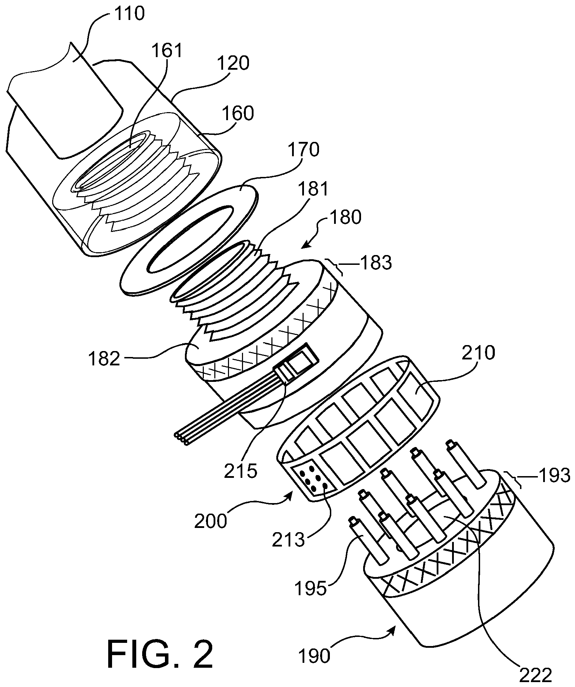

La Fig. 2 représente une vue éclatée montrant la partie inférieure de la sonde capacitive ainsi que le détail de la structure du dispositif de mesure 150.

Le dispositif de mesure multi-capteur comprend principalement un insert 160, une première pièce cylindrique 180 et une seconde pièce cylindrique 190. L'insert 160 se présente sous la forme d'une pièce annulaire de diamètre extérieur sensiblement égal au diamètre intérieur du tube cylindrique 120, et est monté en force à l'intérieur de ce dernier sans toutefois le déformer. Une fois l'insert mis en place, sa base vient affleurer l'extrémité inférieure du tube. La position de l'insert le long de l'axe de la sonde capacitive est ainsi parfaitement déterminée. L'insert vient se loger sous le tube cylindrique intérieur 110, de sorte que la mesure capacitive n'est pas affectée par sa présence. Il présente un alésage axial fileté 161 dans lequel vient se visser une tête tubulaire filetée 181, faisant partie intégrante de la première pièce cylindrique 180.

Le diamètre extérieur de la première pièce cylindrique 180 est sensiblement égal au diamètre extérieur du tube 120. Elle comprend à sa partie supérieure la tête tubulaire filetée 181, destinée à être vissée dans l'insert. Ainsi, l'ensemble constitué par l'insert et le tube vient reposer sur un épaulement 182 lorsque la première pièce cylindrique est en position vissée. Avantageusement, toutefois, un joint 170 peut être placé, comme indiqué, sur l'épaulement 182 de manière à éviter toute détérioration du tube 120 lors du serrage. Alternativement, selon une variante non représentée, l'insert pourra présenter à sa base un épaulement de diamètre égal ou supérieur au diamètre extérieur du tube, la base du tube reposant alors directement sur ledit épaulement.

La surface extérieure de la pièce cylindrique 180 est de préférence moletée sur au moins une partie 183 de sa hauteur afin de faciliter son serrage. Ainsi qu'il sera détaillé plus loin, cette pièce comporte à sa partie inférieure des premiers moyens de fixation rapide 185 (non apparents sur cette figure).

La seconde pièce cylindrique 190 est aussi de diamètre extérieur sensiblement égal à celui du tube 120 et est avantageusement moletée sur au moins une partie 191 de sa hauteur. Des seconds moyens de fixation rapide 195 font partie intégrante de la pièce 190 ou bien sont fixés sur la partie supérieure de cette dernière. Les premiers et seconds moyens de fixation rapide 185 et 195 coopèrent pour solidariser les première et seconde pièces cylindriques 180 et 190.

Selon une première variante de réalisation, les seconds moyens de fixation rapide 195 sont constitués de pions disposés parallèlement à l'axe de révolution de la seconde pièce cylindrique 190 et montés dans la partie supérieure de cette dernière. Les premiers moyens de fixation rapide sont alors constitués par des alésages 185 dans la partie inférieure de la première pièce cylindrique 180. Les pions sont dimensionnés de manière à pouvoir s'engager en force dans les alésages correspondants.

Alternativement, les pions peuvent être prévus sur la première pièce cylindrique et les alésages dans la seconde pièce cylindrique.

De préférence, les pions et alésages correspondants sont disposés selon une distribution angulaire uniforme afin de répartir les contraintes mécaniques lors du serrage.

Selon une seconde variante de réalisation non représentée ici, les seconds moyens de fixation rapide sont constitués par des doigts d'encliquetage, élastiquement déformables, s'étendant dans une ou des direction(s) sensiblement parallèle(s) à l'axe de révolution de la seconde pièce cylindrique. Chaque doigt se termine par une extrémité en rampe inclinée pouvant venir s'engager dans une rainure circulaire aménagée dans la partie inférieure de la première partie cylindrique 180.

Alternativement, les doigts d'encliquetage peuvent être prévus sur la première pièce cylindrique et la rainure dans la seconde pièce cylindrique.

Avantageusement, les doigts sont disposés selon une distribution angulaire uniforme.

Enfin, d'autres types de fixation rapide équivalents peuvent être envisagés par l'homme du métier sans sortir pour autant du cadre de l'invention.

Les deux pièces cylindriques et, le cas échéant, les moyens de fixation rapides sont avantageusement réalisés en matière thermoplastique.

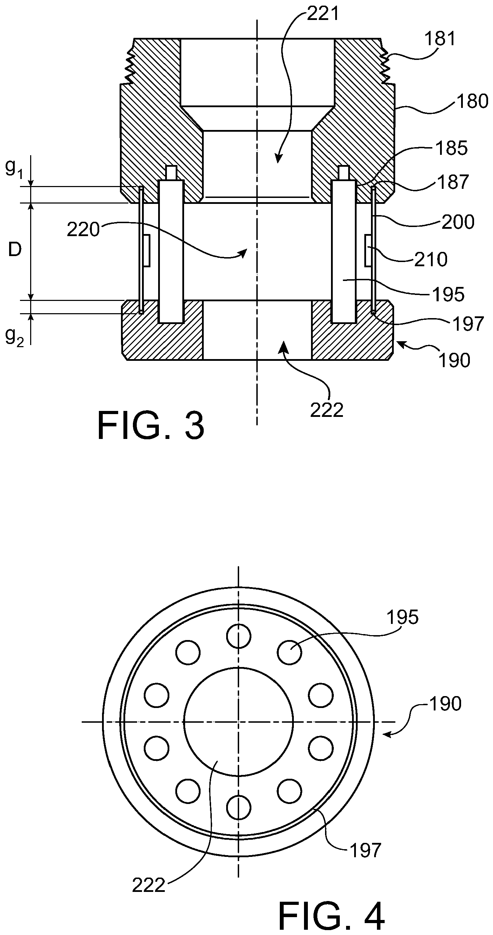

La Fig. 3 montre une section axiale des deux pièces cylindriques assemblées par les moyens de fixation rapides, réalisés ici par des pions 195 et des alésages 185 correspondants.

Les premiers et seconds moyens de fixation rapide font également office d'entretoises entre les deux pièces cylindriques 180 et 190, de sorte qu'une distance prédéterminée *D* est maintenue entre elles.

Des gorges circulaires 187 et 197 sont respectivement aménagées dans la surface inférieure de la première pièce cylindrique et la surface supérieure de la seconde pièce cylindrique. Ces gorges sont en vis-à-vis lorsque les deux pièces sont solidarisées par verrouillage des moyens de fixation rapide.

Un film annulaire 200, portant des capteurs MEMS 210, est monté prisonnier entre les deux pièces cylindriques. Son épaisseur est choisie inférieure à la largeur des gorges 187 et 197 et sa hauteur est choisie légèrement inférieure à *D*+*g*₁+*g*₂ où *g*₁ et *g*₂ sont les profondeurs respectives des deux gorges. Grâce à ces jeux, le film conserve une liberté de rotation à l'intérieur de ces gorges alors même qu'il est emprisonné entre les deux pièces cylindriques 180 et 190. En outre, la distance mesurée sur un axe vertical, entre le support 200 et la base de l'insert 160, est parfaitement déterminée. Ainsi, une fois la sonde capacitive installée dans un réservoir à une hauteur prédéterminée, la hauteur des capteurs est elle-même parfaitement connue.

Les première et seconde pièces cylindriques 180, 190 sont respectivement percées par des trous axiaux 221, 222 de diamètres suffisamment importants pour que le carburant puisse librement circuler entre la première et la seconde pièces cylindriques, d'une part, et entre la première pièce cylindrique et le tube 120, d'autre part. De surcroît, le nombre et l'extension angulaire des moyens de fixation rapide sont choisis suffisamment faibles pour que le carburant circule librement entre la zone 220 et le film annulaire 200. Ainsi, les capteurs sont assurés d'être en permanence en contact avec le carburant.

La Fig. 4 représente en vue de dessus la seconde pièce cylindrique 190. On distingue sur la figure les seconds moyens de fixation rapide (constitués ici par des pions), la rainure circulaire 197 ainsi que le trou de circulation de carburant 220.

Le film annulaire 200 est réalisé en matière isolante, de préférence en polycarbonate. Les capteurs 210 sont montés sur la surface intérieure du film annulaire de sorte qu'un opérateur peut manipuler le film sans les endommager. Une interface de connexion 213, commune aux différents capteurs, est également montée sur la surface extérieure du film annulaire. Elle est avantageusement reliée aux capteurs au moyen de fils noyés dans la matière du film. Un connecteur 215 peut être couplé à l'interface de connexion pour relier les capteurs au processeur local ou au processeur central. La libre rotation du film annulaire 200 dans les gorges 187 et 197 permet une opération de connexion aisée entre l'interface 213 et le connecteur 215, indépendamment de la position de ce dernier.

En cas de dysfonctionnement de l'un des capteurs, la seconde pièce cylindrique peut être aisément démontée et le film annulaire remplacé.

Les capteurs 210 comprennent avantageusement un, et préférentiellement plusieurs, capteur(s) MEMS. Certains de ces capteurs ont pour fonction de mesurer les propriétés physico-chimiques du carburant, notamment sa densité, sa viscosité ou sa permittivité. On connaît par exemple de la demande de brevet US2002/0194906 un type de capteur MEMS capable de mesurer la densité et la viscosité d'un fluide. La mesure de permittivité peut être obtenue à partir de la mesure de capacité d'un condensateur dont on fait varier mécaniquement la distance inter-armature ou la surface.

Des capteurs microélectroniques plus classiques peuvent être également adjoints sur le film annulaire 200, notamment des capteurs de permittivité ou de pression. Ainsi, la mesure de permittivité pourra être réalisée à partir de la mesure de capacité d'un condensateur étalon et la mesure de pression pourra être obtenue à partir de la mesure de tension d'un transducteur piézoélectrique.

Le cas échéant, certains des capteurs seront de nature identique, autrement dit un même capteur pourra être prévu en plusieurs exemplaires, ce pour des raisons de sécurité ou de réduction de bruit par moyennage des mesures.

La mesure primaire de hauteur de carburant sera obtenue à partir des mesures de capacité, fournies par la sonde capacitive, et celles de permittivité, fournies par le dispositif multicapteur.

La mesure secondaire de hauteur de carburant sera par exemple obtenue à partir des mesures de pression et de densité, fournies par le dispositif multicapteur. On s'affranchit ainsi de l'installation de sondes secondaires MFLI et des inconvénients qui leur sont associés.

Les données de mesure issues des différents capteurs sont transmises sur un bus de données à un processeur local ou, à défaut, au processeur central du système de jaugeage. Les mesures de capacité, permittivité, pression et densité peuvent être traitées par un processeur local, avantageusement installé ou noyé dans le corps de la seconde pièce cylindrique 190. Alternativement, le processeur local peut être déporté hors de cette pièce afin de traiter les données de mesure issues d'une pluralité de sondes capacitives et de leurs dispositifs multicapteur associés.

Le processeur local peut se contenter de filtrer et multiplexer les données qu'il reçoit. Selon une variante, il effectue les calculs permettant d'obtenir les mesures primaires et/ou secondaires de hauteur de carburant et les transmet au processeur central. La communication entre le processeur local et le processeur central sera réalisée le cas échéant au moyen d'une liaison sans fil.

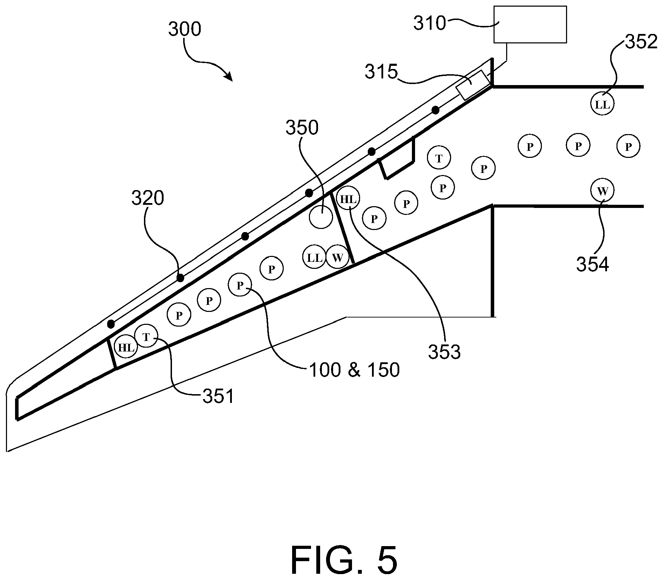

La Fig. 5 représente schématiquement un système de jaugeage de carburant 300 embarqué sur un aéronef. Il comprend un processeur central 310, éventuellement un ou plusieurs concentrateur(s) de données 315, des processeurs locaux 320, des sondes capacitives 100 sur lesquelles ont été installés des dispositifs de mesure multicapteur 150, notés P, ainsi que des capteurs auxiliaires 350 détaillés plus loin.

Chaque processeur local 320 est relié à une pluralité de sondes capacitives (équipées de dispositifs multicapteur) ainsi qu'aux capteurs auxiliaires 350 situés à sa proximité. Les données traitées par les processeurs locaux sont éventuellement regroupées par un concentrateur de données avant d'être transmises au processeur central.

Le processeur central calcule notamment la quantité de carburant en fonction, d'une part, des mesures primaires et/ou secondaires, respectivement fournies par les sondes capacitives et les dispositifs multicapteur, et, d'autre part, de la géométrie des réservoirs. En outre, le processeur central du système de jaugeage traite les mesures issues des capteurs auxiliaires et transmet, le cas échéant, les alarmes correspondantes au système d'alarmes en vol.

Parmi les capteurs auxiliaires 350 on compte des capteurs de température 351, des détecteurs de niveau bas 352, des détecteurs de niveau haut 353 et des capteurs de présence d'eau 354.

Les capteurs de température 351 sont notamment installés dans les réservoirs extérieurs qui sont plus particulièrement exposés à d'importantes variations de température. Il importe en effet d'avertir le poste de pilotage lorsque la température du carburant devient trop basse ou trop élevée, cette situation pouvant affecter le bon fonctionnement de l'avion : une température trop basse augmente la viscosité du carburant et risque de conduire à des difficultés de pompage tandis qu'une température trop élevée peut causer des poches de vapeur dans le système d'alimentation des moteurs.

Avantageusement, des détecteurs de niveau bas sont placés dans les positions les plus basses des différents réservoirs et des détecteurs de niveau haut sont disposés en des positions au dessus desquelles se produit un débordement dans le réservoir d'équilibrage.

Les détecteurs de présence d'eau sont de préférence placés dans des positions basses du réservoir où l'eau, du fait de sa densité plus élevée que celle du kérosène, est susceptible de s'accumuler. Ils peuvent être aussi avantageusement disposés à proximité de certaines sondes capacitives, de manière à permettre l'identification d'une défaillance dans le système de jaugeage.

Les capteurs de température, les capteurs de niveau haut et bas, les détecteurs de présence d'eau sont avantageusement des capteurs MEMS.

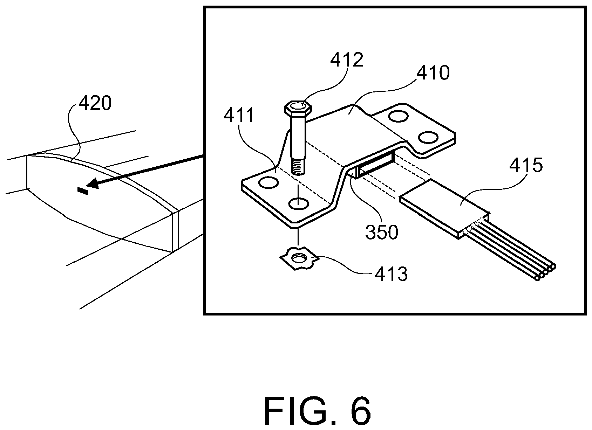

La Fig. 6 illustre un de ces capteurs 350, monté sur la surface intérieure d'un étrier 410. Les pattes 411 de l'étrier sont boulonnées, au moyen de boulons 412 et d'écrous d'ancrage 413, sur la structure interne de l'aéronef, par exemple, comme représenté sur une travée d'aile 420. Le capteur 350 est placé à l'abri des chocs entre la structure de l'avion et l'étrier 410, ce qui permet de réduire considérablement le risque d'endommagement lors d'une opération d'inspection ou de maintenance. La connexion du capteur peut se faire aisément au moyen d'un connecteur multibroche 415.

On notera aussi que, du fait de la fixation de l'étrier sur la travée d'aile, le montage du capteur ne nécessite pas de perforation du réservoir. En outre, en cas de dysfonctionnement du capteur, l'étrier peut être aisément démonté et le capteur remplacé.

## Revendications

1. Dispositif de mesure multicapteur pour système de jaugeage de carburant, **caractérisé en ce qu'**il comprend :
- un insert (160) destiné à être inséré selon un axe à la base d'une sonde capacitive (100), comprenant deux tubes métalliques (110,120) coaxiaux selon cet axe, de manière à prendre une position axiale prédéterminée par rapport à ladite sonde ;
- un support (200) annulaire, réalisé en matière isolante, sur lequel est montée une pluralité de capteurs (210), comprenant au moins un capteur microélectromécanique;
- des moyens de maintien (180, 185, 190, 195) pour maintenir ledit support annulaire à une distance prédéterminée dudit insert selon ledit axe, lesdits moyens de maintien comportant des premiers moyens de maintien (180) montés sur ledit insert et des seconds moyens de maintien (190) montés sur les premiers à l'aide de moyens de fixation rapide (185, 195), le support (200) étant emprisonné entre les premiers et les seconds moyens de maintien lorsque lesdits moyens de fixation rapide sont verrouillés, les premiers et seconds moyens de maintien (180) comprenant des première et seconde pièces cylindriques respectivement,
et **en ce qu'**une première et une seconde gorges circulaires (187, 197) sont aménagées en vis-à-vis, respectivement dans la surface inférieure de la première pièce cylindrique et dans la surface supérieure de la seconde pièce cylindrique, le support (200) étant constitué d'un film annulaire dont la partie supérieure est librement engagée dans la première gorge (187) et la partie inférieure est librement engagée dans la seconde gorge (197).

2. Dispositif de mesure selon la revendication 1, **caractérisé en ce que** ladite pluralité de capteurs comprend au moins un capteur de pression et un capteur de densité.

3. Dispositif de mesure selon l'une des revendications précédentes, **caractérisé en ce qu'**il comprend au moins un capteur de permittivité.

4. Dispositif de mesure selon l'une des revendications précédentes, **caractérisé en ce que** l'insert (160) présente un alésage axial fileté (161).

5. Dispositif de mesure selon la revendication 4, **caractérisé en ce que** les premiers moyens de maintien (180) sont constitués par la première pièce cylindrique, coaxiale avec l'insert, et se terminant à sa partie supérieure par une tête tubulaire filetée (181) destinée à être vissée dans ledit alésage, ladite pièce cylindrique étant percée par un trou axial (221), de part en part.

6. Dispositif de mesure selon la revendication 5, **caractérisé en ce que** les seconds moyens de maintien (190) sont constitués par la seconde pièce cylindrique, coaxiale avec la première, et percée par un trou axial (222), de part en part.

7. Dispositif de mesure selon la revendication 6, **caractérisé en ce qu'**une interface de connexion (213) commune aux différents capteurs (210) est montée à la surface extérieure du film annulaire (200), les fils de connexion entre lesdits capteurs et ladite interface étant noyés dans le matériau dudit film.

8. Dispositif de mesure selon la revendication 7, **caractérisé en ce que** le matériau dudit film est du polycarbonate.

9. Dispositif de mesure selon l'une des revendications 6 à 8, **caractérisé en ce que** les capteurs sont montés sur la surface intérieure du film annulaire.

10. Dispositif de mesure selon la revendication 6, **caractérisé en ce que** lesdits moyens de fixation comprennent, d'une part, des pions montés sur l'une des première et seconde pièces cylindriques, et, d'autre part, des alésages correspondants dans l'autre pièce, lesdits pions étant dimensionnés pour s'engager en force dans lesdits alésages correspondants.

11. Dispositif de mesure selon la revendication 6, **caractérisé en ce que** lesdits moyens de fixation rapide comprennent, d'une part, des doigts d'encliquetage faisant partie intégrante de l'une des première et seconde pièces cylindriques, et d'autre part, une rainure correspondante dans l'autre pièce, lesdits doigts étant adaptés à s'encliqueter dans ladite rainure correspondante.

12. Sonde capacitive comportant un dispositif de mesure selon l'une quelconque des revendications précédentes.

13. Système de jaugeage de carburant embarqué sur un aéronef comprenant :
- une pluralité de sondes capacitives (100) installées à des hauteurs prédéterminées dans une pluralité de réservoirs de carburant ;
- une pluralité de dispositifs de mesure multicapteur (150) selon l'une des revendications 1 à 11, lesdits dispositifs étant respectivement montés sur lesdites sondes capacitives ;
- une pluralité de processeurs locaux (320), chaque processeur local étant adapté à effectuer un traitement sur les données de mesure issues des sondes capacitives, des dispositifs de mesure multicapteur auxquels il est relié ;
- un processeur central adapté à calculer à partir des données ainsi traitées et des caractéristiques géométriques de ladite pluralité de réservoirs, la quantité de carburant que ceux-ci contiennent.

14. Système de jaugeage selon la revendication 13, **caractérisé en ce qu'**il comprend en outre une pluralité de capteurs auxiliaires (350) installés dans ladite pluralité de réservoirs, chaque capteur auxiliaire appartenant à un ensemble constitué d'un détecteur de niveau haut, un détecteur de niveau bas, un détecteur de présence d'eau et un capteur de température, chaque capteur auxiliaire étant relié à un desdits processeurs locaux, ce dernier étant adapté à traiter les données de mesure issues du capteur auxiliaire auquel il est relié.

15. Système de jaugeage selon la revendication 14, **caractérisé en ce que** les capteurs auxiliaires sont des capteurs microélectromécaniques.

## Patentansprüche

1. Multisensor-Messvorrichtung für ein Treibstoffmesssystem, **dadurch gekennzeichnet, dass** sie enthält:
- einen Einsatz (160), der dazu bestimmt ist, gemäß einer Achse an der Basis einer kapazitiven Sonde (100) eingeführt zu werden, die zwei gemäß dieser Achse koaxiale Metallrohre (110, 120) enthält, um eine bezüglich der Sonde vorbestimmte axiale Stellung einzunehmen;
- einen ringförmigen Träger (200) aus Isoliermaterial, auf den eine Vielzahl von Sensoren (210) montiert ist, die mindestens einen mikroelektromechanischen Sensor enthält;
- Halteeinrichtungen (180, 185, 190, 195), um den ringförmigen Träger gemäß der Achse in einem vorbestimmten Abstand zum Einsatz zu halten, wobei die Halteeinrichtungen erste Halteeinrichtungen (180), die auf den Einsatz montiert sind, und zweite Halteeinrichtungen (190) aufweisen, die mit Hilfe von Schnellbefestigungseinrichtungen (185, 195) auf die ersten montiert sind, wobei der Träger (200) zwischen den ersten und den zweiten Halteeinrichtungen eingeschlossen ist, wenn die Schnellbefestigungseinrichtungen verriegelt sind, wobei die ersten und zweiten Halteeinrichtungen (180) erste bzw. zweite zylindrische Bauteile enthalten,
und dass eine erste und eine zweite Kreisnut (187, 197) in der unteren Fläche des ersten zylindrischen Bauteils bzw. in der oberen Fläche des zweiten zylindrischen Bauteils einander gegenüber angeordnet sind, wobei der Träger (200) aus einer ringförmigen Folie besteht, deren oberer Teil frei in die erste Nut (187) eingesetzt und der untere Teil frei in die zweite Nut (197) eingesetzt ist.

2. Messvorrichtung nach Anspruch 1, **dadurch gekennzeichnet, dass** die Vielzahl von Sensoren mindestens einen Drucksensor und einen Dichtesensor enthält.

3. Messvorrichtung nach einem der vorhergehenden Ansprüche, **dadurch gekennzeichnet, dass** sie mindestens einen Permittivitätssensor enthält.

4. Messvorrichtung nach einem der vorhergehenden Ansprüche, **dadurch gekennzeichnet, dass** der Einsatz (160) eine axiale Gewindebohrung (161) aufweist.

5. Messvorrichtung nach Anspruch 4, **dadurch gekennzeichnet, dass** die ersten Halteeinrichtungen (180) aus dem ersten zylindrischen Bauteil bestehen, das mit dem Einsatz koaxial ist und an seinem oberen Teil in einem rohrförmigen Gewindekopf (181) endet, der dazu bestimmt ist, in die Bohrung geschraubt zu werden, wobei das zylindrische Bauteil von einer Seite zur anderen von einem axialen Loch (221) durchbohrt ist.

6. Messvorrichtung nach Anspruch 5, **dadurch gekennzeichnet, dass** die zweiten Halteeinrichtungen (190) aus dem zweiten zylindrischen Bauteil bestehen, das mit dem ersten koaxial ist und das von einer Seite zur anderen von einem axialen Loch (222) durchbohrt ist.

7. Messvorrichtung nach Anspruch 6, **dadurch gekennzeichnet, dass** eine den verschiedenen Sensoren (210) gemeinsame Verbindungsschnittstelle (213) an die Außenfläche der ringförmigen Folie (200) montiert ist, wobei die Verbindungsdrähte zwischen den Sensoren und der Schnittstelle in das Material der Folie eingebettet sind.

8. Messvorrichtung nach Anspruch 7, **dadurch gekennzeichnet, dass** das Material der Folie Polycarbonat ist.

9. Messvorrichtung nach einem der Ansprüche 6 bis 8, **dadurch gekennzeichnet, dass** die Sensoren an die Innenfläche der ringförmigen Folie montiert sind.

10. Messvorrichtung nach Anspruch 6, **dadurch gekennzeichnet, dass** die Befestigungseinrichtungen einerseits Stifte, die auf eines der ersten und zweiten zylindrischen Bauteile montiert sind, und andererseits entsprechende Bohrungen im anderen Bauteil enthalten, wobei die Stifte bemessen sind, um in die entsprechenden Bohrungen presseingepasst zu werden.

11. Messvorrichtung nach Anspruch 6, **dadurch gekennzeichnet, dass** die Schnellbefestigungseinrichtungen einerseits Einrastfinger, die integrierender Bestandteil eines der ersten und zweiten zylindrischen Bauteile sind, und andererseits eine entsprechende Rille im anderen Bauteil enthalten, wobei die Finger geeignet sind, in die entsprechende Rille einzurasten.

12. Kapazitive Sonde, die eine Messvorrichtung nach einem der vorhergehenden Ansprüche aufweist.

13. Treibstoffmesssystem an Bord eines Luftfahrzeugs, das enthält:
- eine Vielzahl kapazitiver Sonden (100), die auf vorbestimmten Höhen in eine Vielzahl von Treibstofftanks eingebaut sind;
- eine Vielzahl von Multisensor-Messvorrichtungen (150) nach einem der Ansprüche 1 bis 11, wobei die Vorrichtungen je auf die kapazitiven Sonden montiert sind;
- eine Vielzahl lokaler Prozessoren (320), wobei jeder lokale Prozessor geeignet ist, eine Verarbeitung an den von den kapazitiven Sonden der Multisensor-Messvorrichtungen, mit denen er verbunden ist, stammenden Messdaten auszuführen;
- einen zentralen Prozessor, der geeignet ist, ausgehend von den so verarbeiteten Daten und den geometrischen Merkmalen der Vielzahl von Tanks die Treibstoffmenge zu berechnen, die diese enthalten.

14. Messsystem nach Anspruch 13, **dadurch gekennzeichnet, dass** es außerdem eine Vielzahl von Hilfssensoren (350) enthält, die in die Vielzahl von Tanks eingebaut sind, wobei jeder Hilfssensor zu einer Einheit gehört, die aus einem Detektor des oberen Pegels, einem Detektor des unteren Pegels, einem Detektor des Vorhandenseins von Wasser und einem Temperaturfühler besteht, wobei jeder Hilfssensor mit einem der lokalen Prozessoren verbunden ist, wobei letzterer geeignet ist, die vom Hilfssensor, mit dem er verbunden ist, stammenden Messdaten zu verarbeiten.

15. Messsystem nach Anspruch 14, **dadurch gekennzeichnet, dass** die Hilfssensoren mikroelektromechanische Sensoren sind.

## Claims

1. Multi-sensor measuring device for fuel gauging system, **characterized in that** it comprises:
- an insert (160) designed to be inserted along an axis at the base of a capacitive probe (100), comprising two metallic tubes (110, 120) that are coaxial along this axis, so as to adopt a predetermined axial position relative to said probe;
- an annular support (200), made of insulating material, on which is mounted a plurality of sensors (210), comprising at least one micro-electromechanical sensor;
- holding means (180, 185, 190, 195) for holding said annular support at a predetermined distance from said insert along said axis, said holding means comprising first holding means (180) mounted on said insert and second holding means (190) mounted on the first by means of rapid attachment means (185, 195), the support (200) being captive between the first and second holding means when said rapid attachment means are locked, the first and second holding means (180) comprising first and second cylindrical parts respectively,
and **in that** a first and a second annular channel (187, 197) are created face-to-face, respectively in the lower surface of the first cylindrical part and in the upper surface of the second cylindrical part, the support (200) consisting of an annular film whose upper part is freely engaged in the first channel (187) and whose lower part is freely engaged in the second channel (197).

2. Measuring device according to Claim 1, **characterized in that** said plurality of sensors comprises at least a pressure sensor and a density sensor.

3. Measuring device according to either of the preceding claims, **characterized in that** it comprises at least a permittivity sensor.

4. Measuring device according to one of the preceding claims, **characterized in that** the insert (160) has a threaded axial bore (161).

5. Measuring device according to Claim 4, **characterized in that** the first holding means (180) consists of the first cylindrical part which is coaxial with the insert and which ends, at its upper part, in a threaded tubular head (181) intended to be screwed into said bore, said cylindrical part having an axial hole (221) passing all the way through it.

6. Measuring device according to Claim 5, **characterized in that** the second holding means (190) consists of the second cylindrical part which is coaxial with the first and which has an axial hole (222) passing all the way through it.

7. Measuring device according to Claim 6, **characterized in that** a connection interface (213), which is common to the various sensors (210), is mounted at the outer surface of the annular film (200), the connection wires between said sensors and said interface being embedded in the material of said film.

8. Measuring device according to Claim 7, **characterized in that** the material of said film is polycarbonate.

9. Measuring device according to one of Claims 6 to 8, **characterized in that** the sensors are mounted on the inner surface of the annular film.

10. Measuring device according to Claim 6, **characterized in that** said attachment means comprise, on one hand, pins mounted on one of the first and second cylindrical parts and, on the other hand, corresponding bores in the other part, said pins being dimensioned so as to engage with a force fit in said corresponding bores.

11. Measuring device according to Claim 6, **characterized in that** said rapid attachment means comprise, on one hand, snap-fitting tabs that form an integral part of one of the first and second cylindrical parts and, on the other hand, a corresponding groove in the other part, said tabs being suitable to snap into said corresponding groove.

12. Capacitive probe comprising a measuring device according to any one of the preceding claims.

13. System for gauging fuel on-board an aircraft, comprising:
- a plurality of capacitive probes (100) installed at predetermined heights in a plurality of fuel tanks;
- a plurality of multi-sensor measuring devices (150) according to one of Claims 1 to 11, said devices being respectively mounted on said capacitive probes;
- a plurality of local processors (320), each local processor being suitable for carrying out processing of the measurement data coming from the capacitive probes, of the multi-sensor measuring devices to which it is connected;
- a central processing unit that is suitable for calculating, on the basis of the data processed in this manner and the geometric characteristics of said plurality of tanks, the quantity of fuel contained therein.

14. Gauging system according to Claim 13, **characterized in that** it further comprises a plurality of auxiliary sensors (350) installed in said plurality of tanks, each auxiliary sensor belonging to an assembly consisting of a high level detector, a low-level detector, a detector for detecting the presence of water and a temperature sensor, each auxiliary sensor being connected to one of said local processors, the latter being suitable for processing the measurement data coming from the auxiliary sensor to which it is connected.

15. Gauging system according to Claim 14, **characterized in that** the auxiliary sensors are micro-electromechanical sensors.
